# EUROPEAN PATENT APPLICATION

(11) **EP 3 819 102 A1**
(43) Date of publication of application: **12.05.2021**
(21) Application number: 19830856.1
(22) Date of filing: 05.06.2019
(51) Int. Cl.: B29C 64/364, B29C 64/135

(54) **THREE-DIMENSIONAL MOLDING APPARATUS, CONTROL DEVICE, AND MOLDING PRODUCTION METHOD**

(30) Priority: 05.07.2018 JP 2018128117
(71) Applicant: Mitsui Chemicals, Inc., Minato-ku Tokyo 105-7122 (JP)
(72) Inventor: SHIODE Hirohisa, Sodegaura-shi, Chiba 299-0265 (JP); YAMANAKA Hiroshi, Sodegaura-shi, Chiba 299-0265 (JP)
(74) Representative: Hoffmann Eitle
(86) International application number: PCT/JP2019/022280
(87) International publication number: WO 2020/008789

(57) **Abstract**

A three-dimensional modeling apparatus (10) includes a container (110), a carrier (120), and a blower unit (160). The container (110) accommodates a curable composition (20). The carrier (120) is configured to face an inner surface (113) of the container (110) and to have a variable distance with respect to the inner surface (113). The blower unit (160) performs blowing between the carrier (120) and the container (110) . Further, in a case where the curable composition (20) is cured in the container (110), the modeled object (200) and the support portion (210), which connects the carrier (120) and the modeled object (200), are formed. A wind (165) from the blower unit (160) is at least temporarily output toward at least one of the modeled object (200) and the support portion (210).

## Description

### TECHNICAL FIELD

The present invention relates to a three-dimensional modeling apparatus, a control apparatus, and a method for manufacturing a modeled object.

### BACKGROUND ART

One of modeled object manufacturing apparatuses is a 3D printer for modeling by curing a composition for each cross section based on three-dimensional data of the modeled object.

Patent Document 1 discloses a technique for performing blowing on a curable resin in order to suppress a change in a temperature of a cured resin layer due to photocuring reaction and perform high-precision and high-speed photo modeling.

### RELATED DOCUMENT

### PATENT DOCUMENT

[Patent Document 1] Japanese Unexamined Patent Publication No. 2005-131938

### SUMMARY OF THE INVENTION

### TECHNICAL PROBLEM

However, when blowing is performed on a curable resin as disclosed in Patent Document 1, a temperature of the whole curable resin decreases, and thus there is a case where a modeling speed decreases.

The present invention provides a technique for manufacturing a modeled object with a high shape accuracy while suppressing the decrease in the temperature of the curable resin in a three-dimensional modeling apparatus.

### SOLUTION TO PROBLEM

According to a first aspect of the present disclosure, there is provided a three-dimensional modeling apparatus including
a container that accommodates a curable composition,
a carrier that is configured to face an inner surface of the container and to have a variable distance with respect to the inner surface, and
a blower unit that performs blowing between the carrier and the container,
in which, in a case where the curable composition is cured in the container, a modeled object and a support portion, which connects the carrier and the modeled object, are formed, and
in which a wind from the blower unit is at least temporarily output toward at least one of the modeled object and the support portion.

According to a second aspect of the present disclosure,
there is provided a control apparatus of a three-dimensional modeling apparatus,
in which the three-dimensional modeling apparatus includes
a container that accommodates a curable composition,
a carrier that is configured to face an inner surface of the container and to have a variable distance with respect to the inner surface, and
a blower unit that performs blowing between the carrier and the container, and
in which the control apparatus
cures the curable composition in the container to form a modeled object and a support portion that connects the carrier and the modeled object, and
at least temporarily outputs a wind from the blower unit toward at least one of the modeled object and the support portion.

According to a third aspect of the present disclosure,
there is provided a method for manufacturing a modeled object using a three-dimensional modeling apparatus,
in which the three-dimensional modeling apparatus includes
a container that accommodates a curable composition,
a carrier that is configured to face an inner surface of the container and to have a variable distance with respect to the inner surface, and
a blower unit that performs blowing between the carrier and the container, the method including
curing the curable composition in the container to form a modeled object and a support portion, which connects the carrier and the modeled object, and
at least temporarily outputting a wind from the blower unit toward at least one of the modeled object and the support portion.

### ADVANTAGEOUS EFFECTS OF INVENTION

According to the present invention, it is possible to provide a technique for manufacturing a modeled object with a high shape accuracy while suppressing a decrease in a temperature of a curable resin in a three-dimensional modeling apparatus.

### BRIEF DESCRIPTION OF THE DRAWINGS

The above-described object, other objects, features and advantages will be further clarified by the preferred embodiments described below and the accompanying drawings below, but are not limited to the detailed embodiments and the drawings.
Fig. 1 is a schematic diagram illustrating a configuration of a three-dimensional modeling apparatus according to a first embodiment.
Figs. 2A to 2C are diagrams illustrating a first example of a guide portion.
Figs. 3A to 3C are diagrams illustrating a second example of the guide portion.
Fig. 4 is a perspective diagram illustrating a third example of the guide portion.
Fig. 5 is a diagram illustrating an example of a target region.
Fig. 6 is a diagram illustrating a structure of a guide portion according to a second embodiment.
Fig. 7 is a block diagram illustrating configurations of a three-dimensional modeling apparatus and a control apparatus according to a third embodiment.

### DESCRIPTION OF EMBODIMENTS

Hereinafter, embodiments of the present invention will be described with reference to the accompanying drawings. Also, throughout the drawings, the same components will be denoted by the same reference signs and the description thereof will not be repeated.

Note that, in the description below, a control unit 140 of a three-dimensional modeling apparatus 10 and a control unit 500 of a control apparatus 50 are shown as blocks in functional units instead of configurations in hardware units unless specifically described. The control unit 140 of the three-dimensional modeling apparatus 10 and the control unit 500 of the control apparatus 50 are realized by any combination of hardware and software based on a CPU, a memory, a program for realizing the components in this diagram that is loaded onto the memory, storage media such as a hard disk for storing the program, and an interface for network connection of any computer. Further, there are various modified examples for realization methods and apparatuses.

### (First Embodiment)

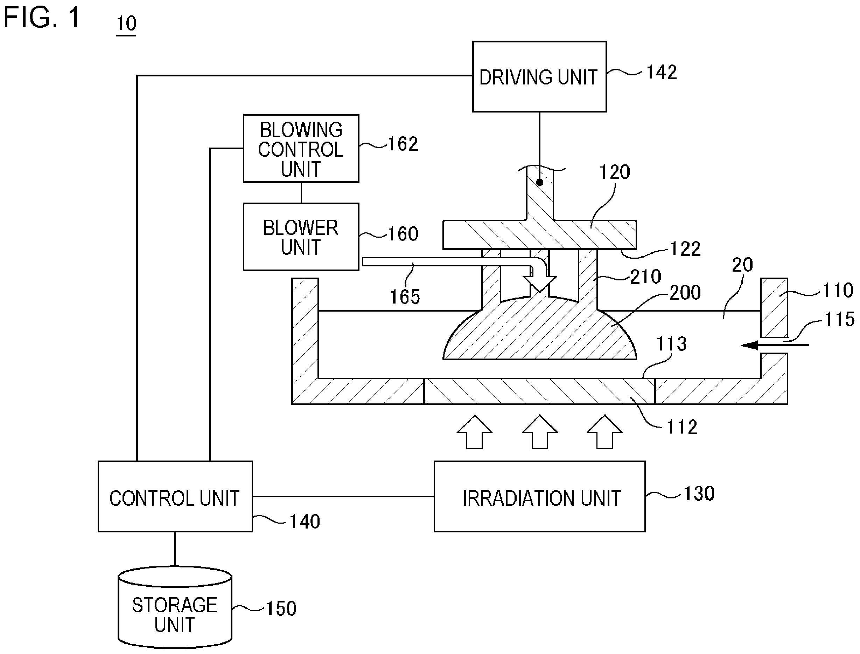

Fig. 1 is a schematic diagram illustrating a configuration of a three-dimensional modeling apparatus 10 according to a first embodiment. A three-dimensional modeling apparatus 10 according to the embodiment includes a container 110, a carrier 120, and a blower unit 160. The container 110 accommodates a curable composition 20. The carrier 120 is configured to face an inner surface 113 of the container 110 and to have a variable distance with respect to the inner surface 113. The blower unit 160 performs blowing between the carrier 120 and the container 110. Further, in a case where the curable composition 20 is cured in the container 110, a modeled object 200 and a support portion 210, which connects the carrier 120 to the modeled object 200, are formed. A wind 165 from the blower unit 160 is at least temporarily output toward at least one of the modeled object 200 and the support portion 210. Description will be performed in detail below.

The three-dimensional modeling apparatus 10 is an apparatus that forms the modeled object 200 by curing the curable composition 20 based on three-dimensional data indicating a shape of the modeled object 200. The modeled object 200 is not particularly limited and may be at least one of a dental object and a medical object. In modeling of the dental object and the medical object, it is necessary to precisely model shapes according to individual users. Therefore, the use of the three-dimensional modeling apparatus 10 is suitable for modeling the dental object or the medical object.

In the three-dimensional modeling apparatus, there is a case where temperature rise occurs at a reaction portion and a vicinity thereof due to a reaction heat generated by curing the curable composition. If so, a cured substance of the curable composition is easily attached to the container, and the modeled object is warped or deformed. Therefore, it is necessary to suppress the temperature rise by releasing the reaction heat. On the other hand, cooling of the whole curable composition in the container leads to reduction in a formation speed of the modeled object 200.

In the three-dimensional modeling apparatus 10 according to the embodiment, the wind 165 from the blower unit 160 is at least temporarily output toward at least one of the modeled object 200 and the support portion 210. In this manner, it is possible to effectively release heat of the reaction portion via the modeled object 200 or via the modeled object 200 and the support portion 210 while suppressing a decrease in a temperature of the curable composition 20.

In addition, in the embodiment, when the wind 165 from the blower unit 160 is at least temporarily output toward at least the support portion 210, a guide portion, which changes an orientation of the wind 165 from the blower unit 160 to a direction toward the modeled object 200, is formed between the carrier 120 and the modeled object 200. In this manner, it is possible to reliably cool the modeled object 200 while further reducing a possibility that the wind 165 applies to the curable composition 20.

Hereinafter, an example, in which the wind 165 from the blower unit 160 is output toward the support portion 210 and the guide portion is formed between the carrier 120 and the modeled object 200, will be described. However, the present invention is not limited to the example, and the wind 165 from the blower unit 160 may be directly output toward the modeled object 200.

In addition, hereinafter, an example, in which the curable composition 20 is photocurable and the three-dimensional modeling apparatus 10 models the modeled object 200 through the light irradiation, will be described. However, a type of the three-dimensional modeling apparatus 10 is not limited to the example.

The curable composition 20 is, for example, a resin composition having fluidity, and includes one or more selected from the group consisting of an acrylic resin, a methacrylic resin, a styrene resin, an epoxy resin, a urethane resin, an acrylate resin, an epoxy acrylate hybrid resin, an epoxy oxetane acrylate hybrid resin, a urethane acrylate resin, a methacrylate resin, a urethane methacrylate resin, and monomers of the resins. In addition, the curable composition 20 may include a polymerization initiator, a filler, a pigment, a dye and the like.

In the embodiment, the curable composition 20 is photocurable, and the container 110 has at least a part provided with a light transmission portion 112. The three-dimensional modeling apparatus 10 according to the embodiment further includes an irradiation unit 130 and a control unit 140. The irradiation unit 130 irradiates the curable composition 20 between the carrier 120 and the light transmission portion 112 with light via the light transmission portion 112. The control unit 140 controls a position of the carrier 120 and the irradiation unit 130. Here, the control unit 140 controls the position of the carrier 120 and the irradiation unit 130 so that the guide portion is formed. Each component of the three-dimensional modeling apparatus 10 will be described in detail below.

The container 110 of the three-dimensional modeling apparatus 10 accommodates the curable composition 20. Apart of the container 110 is provided with the light transmission portion 112 having a higher light transmissivity than other parts. The light transmission portion 112 is, for example, glass. The inner surface 113 is a part of the inner surface of the container 110, and, specifically, the inner surface 113 is a surface, which is on an inner side of the container 110, of the surface of the light transmission portion 112. In the light transmission portion 112, light irradiated from an outside of the container 110 is transmitted to an inside of the container 110 with high efficiency. As a result, the curable composition 20 in a vicinity of the inner surface 113 is cured. In the example of the drawing, the container 110 has a bat shape. Further, the light transmission portion 112 is provided at a bottom of the container 110. In addition, an introduction hole 115 for introducing the curable composition 20 is provided at a side surface of the container 110.

The carrier 120 is a member that becomes a base for modeling. A surface 122 of the carrier 120 faces the inner surface 113 of the light transmission portion 112 in parallel. The three-dimensional modeling apparatus 10 according to the embodiment further includes a driving unit 142 that drives the carrier 120 at least in a direction which is perpendicular to the inner surface 113. In a case where the carrier 120 is driven, a distance between the surface 122 and the inner surface 113 changes.

In the modeling of the modeled object 200, the support portion 210, and the guide portion, the curable composition 20 cured in the vicinity of the inner surface 113 is laminated on the surface 122 of the carrier 120. Further, a three-dimensional structure is formed on the surface 122 by repeatedly curing and laminating the curable composition 20 while widening the distance between the surface 122 and the inner surface 113. Note that, in the drawing, the modeled object 200 illustrates a structure in the middle of the modeling.

The carrier 120 is configured to include, for example, metal. The metal includes aluminum, stainless steel, and the like. In addition, the carrier 120 may include a surface layer. The surface layer includes, for example, an oxide layer of the above-mentioned metal, a hard coat layer obtained by curing the curable composition, a coating layer, and a resin layer. The resin layer includes PET, PP, and the like. The resin layer can be formed on the carrier 120 by attaching, for example, a film or a sheet.

The irradiation unit 130 is configured to include, for example, a light source and an optical drawing system. Although the light source is not particularly limited, the light source may include, for example, an ultraviolet light source, an incandescent lamp, a fluorescent lamp, a phosphorescent lamp, a laser diode, or a light emitting diode. Although the optical drawing system is not particularly limited, the optical drawing system includes at least one of, for example, a mask, a spatial light modulator, a micro mirror device, and a micro electro mechanical systems (MEMS) mirror array. In addition, the irradiation unit 130 includes a light source and a driving apparatus for the optical drawing system, and performs light irradiation on the curable composition 20 under the control of the control unit 140. The irradiation unit 130 may further include optical components such as a lens and a shutter.

In the irradiation unit 130, the light transmission portion 112 is irradiated with light from the light source via the optical drawing system. When light output from the irradiation unit 130 is a light beam, a light irradiation region is scanned with the light beam, and the curable composition 20 in the scanned light irradiation region is cured. In addition, light may be simultaneously projected onto a whole or a part of the light irradiation region from the irradiation unit 130.

The control unit 140 controls the irradiation unit 130 and the driving unit 142. The three-dimensional modeling apparatus 10 further includes a storage unit 150, and the storage unit 150 holds information indicating a three-dimensional shape of a structure to be modeled in advance. The control unit 140 reads the information indicating the three-dimensional shape from the storage unit 150, and generates light irradiation information including information indicating a plurality of light irradiation regions. Here, each light irradiation region is a region on which the light irradiation should be performed by the irradiation unit 130, and corresponds to a cross-sectional shape parallel to the inner surface 113 of the structure to be modeled. Further, the light irradiation information includes information indicating the plurality of light irradiation regions, together with information indicating an order of the light irradiation. Note that, the light irradiation information is not limited to be generated by the control unit 140, and may be generated on the outside in advance and held in the storage unit 150.

The control unit 140 controls the irradiation unit 130 such that the light irradiation is sequentially performed on the light irradiation regions based on the light irradiation information. In addition, the control unit 140 controls the driving unit 142 to change the distance between the surface 122 and the inner surface 113 according to a light irradiation timing of each light irradiation region. As a result, the modeled object 200, the support portion 210, and the guide portion are formed between the carrier 120 and the inner surface 113.

Note that, the distance between the surface 122 and the inner surface 113 may change continuously or intermittently. When the distance changes intermittently, the control unit 140 widens the distance corresponding to one layer according to a switching timing of the light irradiation region. When a plurality of layers are formed in this manner, the modeled object 200, the support portion 210, and the guide portion are obtained as a laminated structure. The amount of change in the distance corresponding to one layer is, for example, equal to or larger than 30 µm and equal to or less than 100 µm. On the other hand, when the distance changes continuously, the control unit 140 switches the light irradiation region according to a changing speed of the distance and a curing speed of the curable composition 20. In this manner, the modeled object 200 having a smooth surface rather than a case where the distance changes intermittently may be obtained.

As described above, in addition to the modeled object 200, the support portion 210 that connects the carrier 120 and the modeled object 200 is formed between the carrier 120 and the inner surface 113. The support portion 210 is a part that is removed from the modeled object 200 after the light irradiation is completed with respect to all the light irradiation regions. A shape of the support portion 210 is not particularly limited, and is, for example, a column shape, a wall shape, a mesh shape, or a lattice shape. The number of support portions 210 is not particularly limited and may be one or more. In addition, the modeled object 200 may have a part which is directly connected to the carrier 120.

In addition, between the carrier 120 and the modeled object 200, the guide portion that changes the orientation of the wind 165 from the blower unit 160 to the direction toward the modeled object 200 is formed. Only one guide portion may be provided or a plurality of guide portions may be provided. The guide portion will be described later in detail with reference to another drawing.

The blower unit 160 is, for example, a blower fan. In addition, the blower unit 160 may be configured to include a cooling apparatus for blowing a cold wind. The cooling apparatus is, for example, an apparatus that performs cooling through water cooling or with a Peltier element. The blower unit 160 outputs the wind 165 toward between the modeled object 200 and the carrier 120. Specifically, the wind from the blower unit 160 is at least temporarily output toward the guide portion. An output direction of the wind 165 of the blower unit 160 may be fixed or may be changed during modeling. However, the blower unit 160 does not output the wind 165 toward a liquid surface of the curable composition 20. In this manner, it is possible to suppress the decrease in the temperature of the curable composition 20.

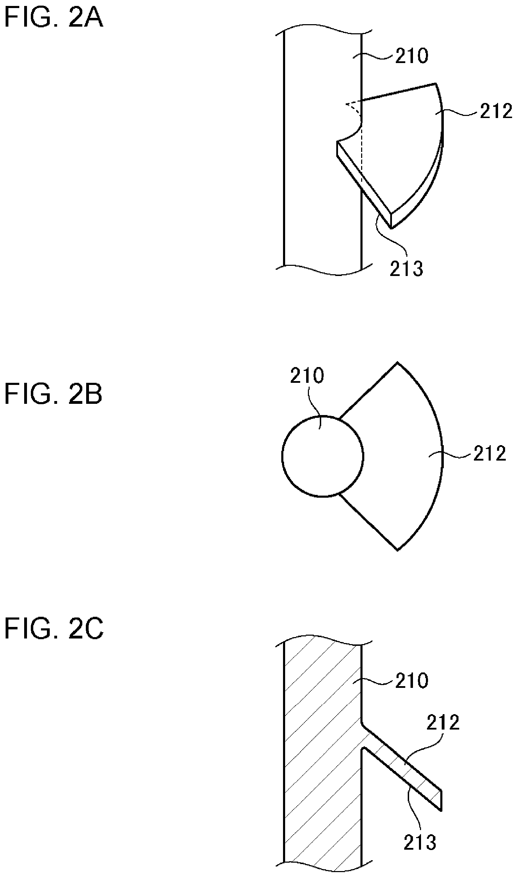

Figs. 2A to 2C are diagrams illustrating a first example of the guide portion 212. Figs. 2A to 2C illustrates an enlarged part of the support portion 210 where the guide portion 212 is provided. Fig. 2A is a perspective diagram, Fig. 2B is a diagram illustrating a state viewed from a direction perpendicular to the surface 122, and Fig. 2C is a cross-sectional diagram illustrating a cross section perpendicular to the surface 122. It is assumed that the wind 165 blows from a left side of the drawings.

The guide portion 212 is configured to change the orientation of the wind 165 from the blower unit 160 to the direction toward the modeled object 200. In the embodiment, the guide portion 212 is integrally provided with the support portion 210. For example, the guide portion 212 may have a structure added to the support portion 210 or may be configured by deforming a part of the support portion 210. For example, the guide portion 212 can have a structure protruding from the support portion 210 at least in a direction parallel to the inner surface 113. In addition, one or more guide portions 212 joined to the plurality of support portions 210 may be provided.

The guide portion 212 has, for example, a guide surface 213 for receiving the wind 165 from the blower unit 160 and changing a direction of the wind 165 toward the modeled object 200. The guide surface 213 may be a flat surface or a curved surface. For example, the guide surface 213 diagonally faces the blower unit 160 and the modeled object 200. Further, it is preferable that the guide surface 213 is visible when the guide portion 212 is viewed from a blowing direction of the blower unit 160. Note that, the wind 165 from the blower unit 160 may be guided to the modeled object 200 via the plurality of guide portions 212.

An area S_{G} of the guide surface 213 is not particularly limited, and is preferably equal to or larger than 1 mm² and is more preferably equal to or larger than 10 mm² in order to effectively change the orientation of the wind 165. Note that, when a plurality of guide surfaces 213 are provided, the area S_{G} is the sum of areas of all the guide surfaces 213.

In the example illustrated in Figs. 2A to 2C, the guide portion 212 has a blade-shaped structure joined to the support portion 210. In the example, although the support portion 210 has a cylindrical shape, the support portion 210 is not limited to the cylindrical shape. In the blade-shaped structure, the plate-shaped guide portion 212 is obliquely joined to the support portion 210 to surround a part of an outer periphery of the support portion 210. Further, the guide surface 213 of the guide portion 212 is a surface of the guide portion 212 on a side of the modeled object 200, and is provided obliquely with respect to the surface 122 and the inner surface 113. More specifically, the guide portion 212 is inclined to approach the inner surface 113 as increasing distance from the support portion 210. In this way, in a case where the guide portion 212 is added to the support portion 210, a surface area can be increased, and thus efficiency of heat radiation via the support portion 210 can be improved. Two or more guide portions 212 may be provided with respect to one support portion 210.

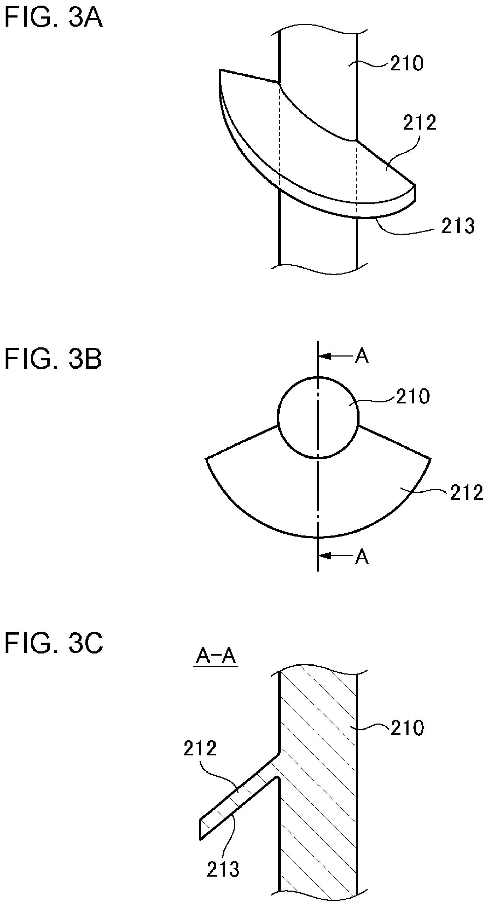

Figs. 3A to 3C are diagrams illustrating a second example of the guide portion 212. Figs. 3A to 3C illustrates an enlarged part of the support portion 210 where the guide portion 212 is provided. Fig. 3A is a perspective diagram, Fig. 3B is a diagram illustrating a state viewed from the direction perpendicular to the surface 122, and Fig. 3C is a cross-sectional diagram taken along a line A-A of Fig. 3B. It is assumed that the wind 165 blows from a left side in Figs. 3A and 3B.

Also in the drawing, the guide portion 212 has a blade-shaped structure joined to the support portion 210. In the example, a height of a joining position of the plate-shaped guide portion 212 with respect to the support portion 210 changes along a circumferential direction. Specifically, the height of the joining position of the guide portion 212 with respect to the support portion 210 approaches the inner surface 113 as increasing distance from the blower unit 160. By doing so, the guide portion 212 is inclined to approach the inner surface 113 as increasing distance from the blower unit 160. In addition, in the example, since the support portion 210, to which the guide portion 212 is joined, is not positioned between the guide portion 212 and the blower unit 160, the wind 165 from the blower unit 160 is not blocked.

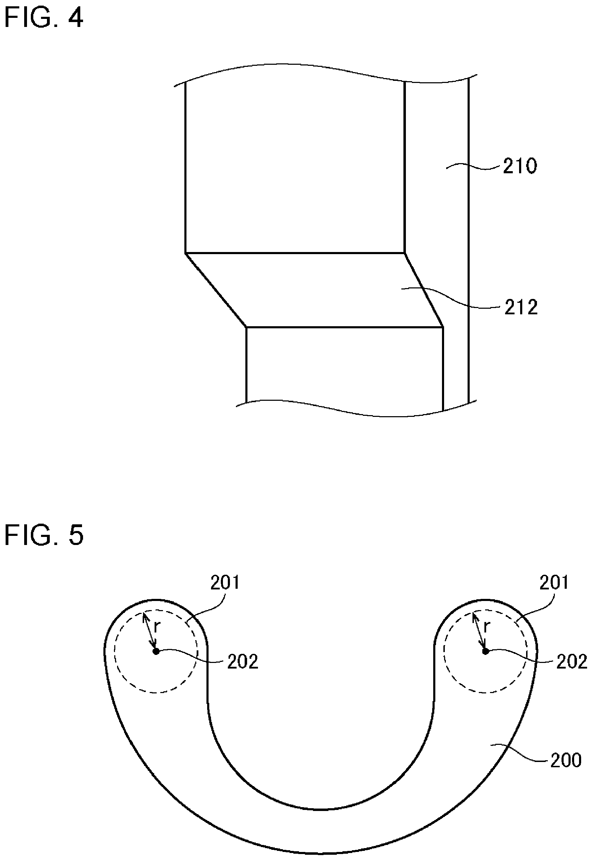

Fig. 4 is a perspective diagram illustrating a third example of the guide portion 212. The drawing illustrates an enlarged part of the support portion 210 where the guide portion 212 is provided. In the example, the guide portion 212 is configured by deforming a part of the support portion 210. In addition, in the example, the guide portion 212 is a tapered portion of the support portion 210. The tapered portion becomes thinner in the direction toward the modeled object 200 from the support portion 210. In the tapered portion, an area of a cross section parallel to the inner surface 113 of the support portion 210 becomes smaller as approaching the modeled object 200. Specifically, the support portion 210 has a wall shape, and has a thickness reduced at the tapered portion. However, the support portion 210 is not limited to the wall shape. More specifically, in the example, a part of the surface of the support portion 210 on a side of the blower unit 160 serves as the guide surface 213, and is included in the guide portion 212.

As another example, for example, the guide portion 212 may be a ventilation hole having an opening facing the blower unit 160 and an opening facing the modeled object 200. In addition, the support portion 210 may extend obliquely with respect to the surface 122 such that the whole support portion 210 functions as the guide portion 212.

Note that, a structure of the guide portion 212 is not limited to the examples.

It is possible to set a specific region, to which the wind 165 is applied, of the modeled object 200 by adjusting a position where the guide portion 212 is provided, a shape of the guide portion 212, and a shape and an orientation of the guide surface 213. For example, the guide portion 212 is provided so that the wind 165 from the blower unit 160 towards a predetermined target region 201 of the modeled object 200. Note that, in this case, the wind 165 does not need to be applied to only the target region 201, and a position, to which the strongest wind 165 is applied, may be in the target region 201. In addition, a plurality of target regions 201 may be set.

Fig. 5 is a diagram illustrating an example of the target region 201. The drawing illustrates a relationship between an appearance (projection) of the completed modeled object 200, the target region 201, and a point 202, which are viewed from the direction perpendicular to the inner surface 113. The target region 201 includes, for example, the point 202 farthest to a periphery of the modeled object 200, that is, the point 202 farthest from the periphery of the modeled object 200 when the modeled object 200 is viewed from the direction perpendicular to the inner surface 113. In other words, the point 202 is a center of the largest circle of a circle that can be drawn to be inscribed on an edge of the modeled object 200. The target region 201 is, for example, a region within a circle having a radius r centered on the point 202. r is not particularly limited, and, for example, may be equal to or larger than 0.1 mm and be equal to or less than 20 mm, or may be equal to or larger than 1 mm and be equal to or less than 10 mm. In such a region, a density of a region where the curable composition 20 is cured is high, and a large amount of reaction heat is generated. Therefore, it is particularly necessary to perform cooling by applying the wind 165.

In addition, when viewed from the direction perpendicular to the inner surface 113, the target region 201 may include a region that overlaps a region of the modeled object 200 in which a shape accuracy is most required. By doing so, the deformation or the like can be suppressed by particularly releasing the heat from the region in which the shape accuracy is most required. For example, when the modeled object 200 is a mouthpiece or a pseudo tooth, a region, which overlaps a configuration region of an occlusal surface when viewed from the direction perpendicular to the inner surface 113, can be the target region 201. The occlusal surface is a so-called tooth-to-tooth meshing part and needs to be formed with high accuracy while having a complicated structure. The region in which the shape accuracy is most required can be determined in advance in comparison with the shape and purpose of the curable composition 20.

In addition, the target region 201 may include a region of the modeled object 200 that is initially exposed from the curable composition 20. In the three-dimensional modeling apparatus 10 according to the embodiment, the light transmission portion 112 is provided at a bottom of the three-dimensional modeling apparatus 10, and the modeled object 200 is gradually exposed from below the liquid surface to above the liquid surface of the curable composition 20 in such a way that the carrier 120 is pulled upward as modeling is progressed. The region of the modeled object 200 that is initially exposed from the curable composition 20 is a region of the modeled object 200 that is closest to the surface 122. Here, when blowing is started toward the region initially exposed from the curable composition 20, the modeled object 200 can be cooled for a long time.

The three-dimensional modeling apparatus 10 according to the embodiment further includes a blowing control unit 162 that controls the blower unit 160. The blowing control unit 162 controls a timing of blowing from the blower unit 160 based on a timing at which at least a part of the modeled object 200 starts to be exposed from the curable composition 20 in the container 110. However, it is assumed that the guide portion 212 is formed before the timing at which at least a part of the modeled object 200 starts to be exposed from the curable composition 20 in the container 110.

In a case where the blowing is performed for a long time on the liquid surface of the curable composition 20 before the modeled object 200 is exposed from the curable composition 20, the temperature of the curable composition 20 decreases, and thus there is a problem in that a modeling speed decreases. Therefore, it is preferable that the blowing is started in consideration of the timing at which the modeled object 200 starts to be exposed from the curable composition 20.

The control unit 140 further controls the blowing control unit 162. The blowing control unit 162 includes a driving apparatus for the blower unit 160, and starts and stops blowing of the blower unit 160 under the control of the control unit 140. The blowing control unit 162 may further control a blowing intensity of the blower unit 160 and an orientation in which the wind 165 is output.

In the control unit 140, the timing at which the modeled object 200 starts to be exposed from the curable composition 20 is calculated based on a liquid surface position of the curable composition 20 in the three-dimensional modeling apparatus 10 and the shapes of the support portion 210 and the modeled object 200 which are modeled on the carrier 120. In addition, information indicating the timing at which the modeled object 200 starts to be exposed from the curable composition 20 may be held in the storage unit 150 in association with the information indicating the position of the carrier 120. Further, the control unit 140 controls the blowing control unit 162 to start the blowing of the blower unit 160 before t₁ second from, for example, the timing at which the modeled object 200 starts to be exposed from the curable composition 20. The t₁ second is, for example, equal to or larger than 0.1 seconds and is equal to or less than 10 seconds. In addition, the control unit 140 controls the blowing control unit 162 to stop the blowing of the blower unit 160 after t₂ second from the completion of the last light irradiation for modeling the modeled object 200. The t₂ second is, for example, equal to or larger than 0.1 seconds and is equal to or less than 10 seconds.

Hereinafter, a method for manufacturing the modeled object 200 according to the embodiment will be described. The method for manufacturing the modeled object 200 according to the embodiment is a method for manufacturing the modeled object 200 using the three-dimensional modeling apparatus 10 as described above.

Prior to modeling, three-dimensional data of the modeled object 200 is held in the storage unit 150. In addition, based on the three-dimensional data of the modeled object 200, the light irradiation information for modeling the support portion 210, the guide portion 212, and the modeled object 200 is generated. Note that, the shapes of the support portion 210 and the guide portion 212 can be determined by a user of the three-dimensional modeling apparatus 10 and can be stored in the storage unit 150, together with the three-dimensional data of the modeled object 200.

Note that, the user may input information indicating the target region 201 into the three-dimensional modeling apparatus 10, and the control unit 140 may design the guide portion 212 based on the information indicating the target region 201 so that the wind 165 is applied to the target region 201. The information indicating the target region 201 is, for example, an image indicating the region when viewed from the direction perpendicular to the inner surface 113. For example, the control unit 140 can select reference information with that the target region 201 can receive the wind from among a plurality of pieces of reference information indicating the shape, the position, or the like of the guide portion 212 held in advance in the storage unit 150, and can design the guide portion 212 using the selected reference information. In addition, the control unit 140 may design the guide portion 212 based on a simulation result a flow of the wind 165.

Further, the carrier 120 is disposed in a vicinity of the light transmission portion 112 of the container 110 in which the curable composition 20 is accommodated. At this time, the distance between the surface 122 and the inner surface 113 is, for example, equal to or larger than 30 µm and is equal to or less than 100 µm.

Next, the control unit 140 causes the light to be irradiated from the irradiation unit 130 toward the light transmission portion 112 so that the light irradiation is performed on an initial light irradiation region based on the light irradiation information. The curable composition 20 between the surface 122 and the inner surface 113 is irradiated with the light from the irradiation unit 130 via the light transmission portion 112. Therefore, the curable composition 20 between the surface 122 and the inner surface 113 is cured into a shape of the light irradiation region and the cured substance adheres to the surface 122.

Subsequently, the control unit 140 sequentially performs the light irradiation on the plurality of light irradiation regions based on the light irradiation information. Furthermore, as described above, the control unit 140 controls the driving unit 142 such that the distance between the surface 122 and the inner surface 113 is widened. The cured substance of the curable composition 20, which is newly formed by the light irradiation, is laminated with respect to the cured substance of the curable composition 20 which is formed immediately before. Note that, at this stage, the cured substance of the curable composition 20 may be in a semi-cured state.

The blowing is at least temporarily performed from the blower unit 160 while the modeling is performed in this manner. The wind 165 from the blower unit 160 is guided to the modeled object 200 in such a way that the orientation is changed at the guide portion 212 formed by curing the curable composition 20. Further, the wind 165 is applied to the surface of the modeled object 200 that faces the surface 122, and the modeled object 200 is cooled.

After the light irradiation is performed on the last light irradiation region, the support portion 210, the guide portion 212, and the modeled object 200 are removed from the carrier 120. Thereafter, there is a case where the support portion 210, the guide portion 212, and the modeled object 200 are post-cured. Next, the support portion 210 and the guide portion 212 are removed from the modeled object 200, and thus the modeled object 200 is obtained. Note that, the support portion 210 and the guide portion 212 may be removed from the modeled object 200 before being post-cured.

Next, an operation and effect of the embodiment will be described. According to the embodiment, the wind 165 from the blower unit 160 is at least temporarily output toward at least one of the modeled object 200 and the support portion 210. In this manner, it is possible to effectively release the heat of the reaction portion from a side of the modeled object 200 while suppressing the decrease in the temperature of the curable composition 20, and thus it is possible to manufacture the modeled object with a high shape accuracy.

### (Second Embodiment)

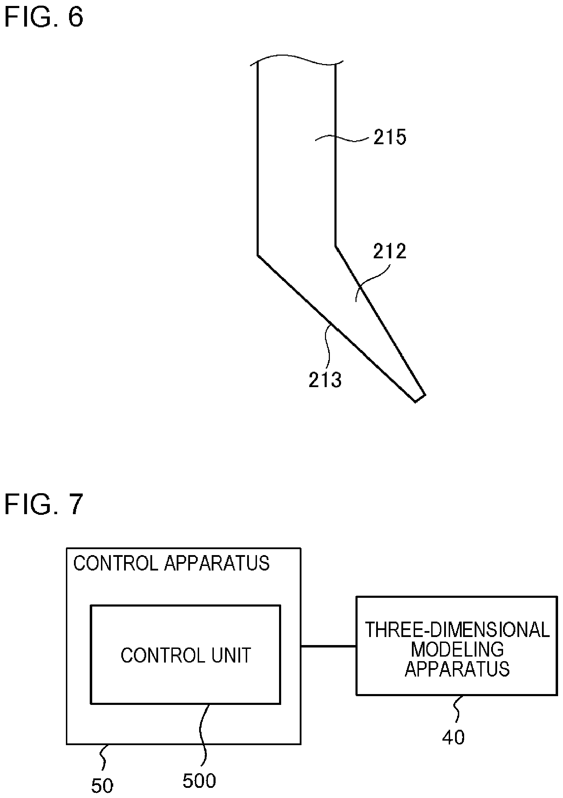

Fig. 6 is a diagram illustrating a structure of a guide portion 212 according to a second embodiment. A three-dimensional modeling apparatus 10 according to the embodiment is the same as the three-dimensional modeling apparatus 10 according to the first embodiment except that the guide portion 212 is provided separately from the support portion 210.

In the embodiment, the guide portion 212 is connected to only one of the carrier 120 and the modeled object 200. For example, the guide portion 212 is connected to the carrier 120 or the modeled object 200 via a guide support portion 215. The guide portion 212 may be provided at an end of the guide support portion 215, or may be provided in the middle of the guide support portion 215. The drawing illustrates an example in which the guide portion 212 is provided at the end of the guide support portion 215. The guide portion 212 has the guide surface 213 similarly to the first embodiment. In addition, the guide portion 212 may have a structure added to the guide support portion 215, or the guide portion 212 may be configured by deforming a part of the guide support portion 215. Further, one or more guide portions 212 joined to the plurality of guide support portions 215 may be provided.

The guide portion 212 and the guide support portion 215 are parts that are removed from the modeled object 200 after the light irradiation is completed with respect to all the light irradiation regions. A shape of the guide support portion 215 is not particularly limited, and is, for example, a column shape, wall shape, a mesh shape, or a lattice shape. The number of guide support portions 215 is not particularly limited, and may be one or more.

The guide portion 212 is not particularly limited, and may be, for example, a blade-shaped structure joined to the guide support portion 215. In addition, the guide portion 212 may be a tapered portion of the guide support portion 215 that becomes thinner toward the modeled object 200. For example, a relationship between the guide support portion 215 and the guide portion 212 can be represented by replacing the support portion 210 with the guide support portion 215 in the example of the guide portion 212 of the first embodiment. Note that, the guide portion 212 may be provided at the support portion 210 while being provided at the guide support portion 215. In addition, the guide portion 212 that is joined to both the support portion 210 and the guide support portion 215 may be provided.

In addition, the guide portion 212 may be directly joined to the carrier 120 or the modeled object 200.

In a method for manufacturing the modeled object 200 according to the embodiment, the light irradiation information for modeling the support portion 210, the guide support portion 215, the guide portion 212, and the modeled object 200 is generated based on the three-dimensional data of the modeled object 200. Note that, the shapes of the support portion 210, the guide support portion 215, and the guide portion 212 can be determined by the user of the three-dimensional modeling apparatus 10, and can be stored in the storage unit 150, together with the three-dimensional data of the modeled object 200. In addition, similarly to the description according to the first embodiment, the control unit 140 may design the guide support portion 215 and the guide portion 212 based on the information indicating the target region 201 so that the wind 165 is applied to the target region 201.

After the light irradiation is performed on the last light irradiation region, the support portion 210, the guide support portion 215, the guide portion 212, and the modeled object 200 are removed from the carrier 120. Thereafter, there is a case where the support portion 210, the guide support portion 215, the guide portion 212, and the modeled object 200 are post-cured. Next, the support portion 210, the guide support portion 215, and the guide portion 212 are removed from the modeled object 200, and thus the modeled object 200 is obtained. Note that, the support portion 210, the guide support portion 215, and the guide portion 212 may be removed from the modeled object 200 before being post-cured.

Note that, in the embodiment, the support portion 210 may not be formed. For example, one part of the modeled object 200 can be directly joined to the surface 122, and the guide support portion 215 and the guide portion 212 can be formed between another part and the surface 122.

In addition, in the embodiment, the support portion 210, which is not provided with the guide portion 212, may be formed separately from the guide support portion 215.

Next, an operation and effect of the embodiment will be described. In the embodiment, the same operation and effect as in the first embodiment can be obtained. In addition, the guide portion 212 can be freely provided independently from the support portion 210.

### (Third Embodiment)

Fig. 7 is a block diagram illustrating configurations of a three-dimensional modeling apparatus 40 and a control apparatus 50 according to a third embodiment. The control apparatus 50 according to the embodiment is a control apparatus of the three-dimensional modeling apparatus 40. The three-dimensional modeling apparatus 40 according to the embodiment is similar to the three-dimensional modeling apparatus 10 according to the first embodiment, and includes a container 110, a carrier 120, and a blower unit 160. The container 110 accommodates a curable composition 20. The carrier 120 is configured to face an inner surface 113 of the container 110 and to have a variable distance with respect to the inner surface 113. The blower unit 160 performs blowing between the carrier 120 and the container 110. In addition, the control apparatus 50 cures the curable composition 20 in the container 110 to form the modeled object 200 and a support portion 210 that connects the carrier 120 and the modeled object 200. Further, the control apparatus 50 causes the wind from the blower unit 160 to be at least temporarily output toward at least one of the modeled object 200 and the support portion 210.

The control apparatus 50 according to the embodiment includes a control unit 500. The control unit 500 is the same as the control unit 140 according to the first embodiment.

In the embodiment, the same operation and effect as in the first embodiment can be obtained.

Although the embodiments of the present invention are described hereinabove with reference to the drawings, the embodiments are merely examples of the present invention, and various configurations other than the above can be adopted. In addition, each of the above-described embodiments can be combined within a scope in which content does not conflict with each other.

Hereinafter, examples of reference forms will be additionally described.
1-1. A three-dimensional modeling apparatus including:
   a container that accommodates a curable composition,
   a carrier that is configured to face an inner surface of the container and to have a variable distance with respect to the inner surface, and
   a blower unit that performs blowing between the carrier and the container,
   in which, in a case where the curable composition is cured in the container, a modeled object and a support portion, which connects the carrier and the modeled object, are formed, and
   in which a wind from the blower unit is at least temporarily output toward at least one of the modeled object and the support portion.
1-2. In the three-dimensional modeling apparatus of 1-1,
   a guide portion, which changes an orientation of the wind from the blower unit to a direction toward the modeled object, is formed between the carrier and the modeled object, and
   the wind from the blower unit is at least temporarily output toward the guide portion.
1-3. In the three-dimensional modeling apparatus of 1-2,
   the guide portion is provided integrally with the support portion.
1-4. In the three-dimensional modeling apparatus of 1-3,
   the guide portion has a blade-shaped structure joined to the support portion.
1-5. In the three-dimensional modeling apparatus of 1-3,
   the guide portion is a tapered portion that becomes thinner in a direction toward the modeled object from the support portion.
1-6. In the three-dimensional modeling apparatus of any one of 1-2 to 1-5,
   the guide portion is provided to cause the wind from the blower unit to be directed to a predetermined target region of the modeled object.
1-7. In the three-dimensional modeling apparatus of 1-6,
   the target region includes a point farthest from a periphery of the modeled object when the modeled object is viewed from a direction perpendicular to the inner surface facing the carrier.
1-8. In the three-dimensional modeling apparatus of 1-6 or 1-7,
   the target region includes a region that overlaps a region of the modeled object in which a shape accuracy is most required when viewed from a direction perpendicular to the inner surface facing the carrier.
1-9. In the three-dimensional modeling apparatus of any one of 1-6 to 1-8,
   the target region includes a region that is initially exposed from the curable composition in the modeled object.
1-10. In the three-dimensional modeling apparatus of any one of 1-2 to 1-9,
   the curable composition is photocurable,
   at least a part of the container is provided with a light transmission portion,
   the three-dimensional modeling apparatus further includes
   an irradiation unit that irradiates the curable composition between the carrier and the light transmission portion with light via the light transmission portion, and
   a control unit that controls a position of the carrier and the irradiation unit, and
   the control unit controls the position of the carrier and the irradiation unit so that the guide portion is formed.
1-11. The three-dimensional modeling apparatus of any one of 1-1 to 1-10, further includes
   a blowing control unit that controls the blower unit,
   in which the blowing control unit controls a timing of blowing from the blower unit based on a timing at which at least a part of the modeled object starts to be exposed from the curable composition in the container.
2-1. A control apparatus of a three-dimensional modeling apparatus,
   in which the three-dimensional modeling apparatus includes
   a container that accommodates a curable composition,
   a carrier that is configured to face an inner surface of the container and to have a variable distance with respect to the inner surface, and
   a blower unit that performs blowing between the carrier and the container, and
   in which the control apparatus
   cures the curable composition in the container to form a modeled object and a support portion that connects the carrier and the modeled object, and
   at least temporarily outputs a wind from the blower unit toward at least one of the modeled object and the support portion.
2-2. In the control apparatus of 2-1,
   a guide portion, which changes an orientation of the wind from the blower unit to a direction toward the modeled object, is formed between the carrier and the modeled object, and
   the wind from the blower unit is at least temporarily output toward the guide portion.
2-3. In the control apparatus of 2-2,
   the guide portion is provided integrally with the support portion.
2-4. In the control apparatus of 2-3,
   the guide portion has a blade-shaped structure joined to the support portion.
2-5. In the control apparatus of 2-3,
   the guide portion is a tapered portion that becomes thinner in a direction toward the modeled object from the support portion.
2-6. In the control apparatus of any one of 2-2 to 2-5,
   the guide portion is provided to cause the wind from the blower unit to be directed to a predetermined target region of the modeled object.
2-7. In the control apparatus of 2-6,
   the target region includes a point farthest from a periphery of the modeled object when the modeled object is viewed from a direction perpendicular to the inner surface.
2-8. In the control apparatus of 2-6 or 2-7,
   the target region includes a region that overlaps a region of the modeled object in which a shape accuracy is most required when viewed from a direction perpendicular to the inner surface.
2-9. In the control apparatus of any one of 2-6 to 2-8,
   the target region includes a region that is initially exposed from the curable composition in the modeled object.
2-10. In the control apparatus of any one of 2-2 to 2-9,
   the curable composition is photocurable,
   at least a part of the container is provided with a light transmission portion,
   the three-dimensional modeling apparatus further includes
   an irradiation unit that irradiates the curable composition between the carrier and the light transmission portion with light via the light transmission portion, and
   a control unit that controls a position of the carrier and the irradiation unit, and
   the control unit controls the position of the carrier and the irradiation unit so that the guide portion is formed.
2-11. In the control apparatus of any one of 2-1 to 2-10,
   the three-dimensional modeling apparatus further includes a blowing control unit that controls the blower unit, and
   the blowing control unit controls a timing of blowing from the blower unit based on a timing at which at least a part of the modeled object starts to be exposed from the curable composition in the container.
3-1. A method for manufacturing a modeled object using a three-dimensional modeling apparatus,
   in which the three-dimensional modeling apparatus includes
   a container that accommodates a curable composition,
   a carrier that is configured to face an inner surface of the container and to have a variable distance with respect to the inner surface, and
   a blower unit that performs blowing between the carrier and the container, the method including
   curing the curable composition in the container to form a modeled object and a support portion, which connects the carrier and the modeled object, and
   at least temporarily outputting a wind from the blower unit toward at least one of the modeled object and the support portion.
3-2. In the method for manufacturing a modeled object of 3-1,
   a guide portion, which changes an orientation of the wind from the blower unit to a direction toward the modeled object, is formed between the carrier and the modeled object, and
   the wind from the blower unit is at least temporarily output toward the guide portion.
3-3. In the method for manufacturing a modeled object of 3-2,
   the guide portion is provided integrally with the support portion.
3-4. In the method for manufacturing a modeled object of 3-3,
   the guide portion has a blade-shaped structure joined to the support portion.
3-5. In the method for manufacturing a modeled object of 3-3,
   the guide portion is a tapered portion that becomes thinner in a direction toward the modeled object from the support portion.
3-6. In the method for manufacturing a modeled object of any one of 3-2 to 3-5,
   the guide portion is provided to cause the wind from the blower unit to be directed to a predetermined target region of the modeled object.
3-7. In the method for manufacturing a modeled object of 3-6,
   the target region includes a point farthest from a periphery of the modeled object when the modeled object is viewed from a direction perpendicular to the inner surface.
3-8. In the method for manufacturing a modeled object of 3-6 or 3-7,
   the target region includes a region that overlaps a region of the modeled object in which a shape accuracy is most required when viewed from a direction perpendicular to the inner surface.
3-9. In the method for manufacturing a modeled object of any one of 3-6 to 3-8,
   the target region includes a region that is initially exposed from the curable composition in the modeled object.
3-10. In the method for manufacturing a modeled object of any one of 3-2 to 3-9,
   the curable composition is photocurable,
   at least a part of the container is provided with a light transmission portion,
   the three-dimensional modeling apparatus further includes
   an irradiation unit that irradiates the curable composition between the carrier and the light transmission portion with light via the light transmission portion, and
   a control unit that controls a position of the carrier and the irradiation unit, and
   the control unit controls the position of the carrier and the irradiation unit so that the guide portion is formed.
3-11. In the method for manufacturing a modeled object of any one of 3-1 to 3-10,
   the three-dimensional modeling apparatus further includes a blowing control unit that controls the blower unit, and
   the blowing control unit controls a timing of blowing from the blower unit based on a timing at which at least a part of the modeled object starts to be exposed from the curable composition in the container.

This application claims the priority on the basis of Japanese application Japanese Patent Application No. 2018-128117 for which it applied on July 5, 2018, and takes in those the indications of all here.

## Claims

1. A three-dimensional modeling apparatus comprising:
a container that accommodates a curable composition;
a carrier that is configured to face an inner surface of the container and to have a variable distance with respect to the inner surface; and
a blower unit that performs blowing between the carrier and the container,
wherein, in a case where the curable composition is cured in the container, a modeled object and a support portion, which connects the carrier and the modeled object, are formed, and
wherein a wind from the blower unit is at least temporarily output toward at least one of the modeled object and the support portion.

2. The three-dimensional modeling apparatus according to claim 1,
wherein a guide portion, which changes an orientation of the wind from the blower unit to a direction toward the modeled object, is formed between the carrier and the modeled object, and
wherein the wind from the blower unit is at least temporarily output toward the guide portion.

3. The three-dimensional modeling apparatus according to claim 2,
wherein the guide portion is provided integrally with the support portion.

4. The three-dimensional modeling apparatus according to claim 3,
wherein the guide portion has a blade-shaped structure joined to the support portion.

5. The three-dimensional modeling apparatus according to claim 3,
wherein the guide portion is a tapered portion that becomes thinner in a direction toward the modeled object from the support portion.

6. The three-dimensional modeling apparatus according to any one of claims 2 to 5,
wherein the guide portion is provided to cause the wind from the blower unit to be directed to a predetermined target region of the modeled object.

7. The three-dimensional modeling apparatus according to claim 6,
wherein the target region comprises a point farthest from a periphery of the modeled object when the modeled object is viewed from a direction perpendicular to the inner surface facing the carrier.

8. The three-dimensional modeling apparatus according to claim 6 or 7,
wherein the target region comprises a region that overlaps a region of the modeled object in which a shape accuracy is most required when viewed from a direction perpendicular to the inner surface facing the carrier.

9. The three-dimensional modeling apparatus according to any one of claims 6 to 8,
wherein the target region comprises a region that is initially exposed from the curable composition in the modeled object.

10. The three-dimensional modeling apparatus according to any one of claims 2 to 9,
wherein the curable composition is photocurable,
wherein at least a part of the container is provided with a light transmission portion,
wherein the three-dimensional modeling apparatus further comprises
an irradiation unit that irradiates the curable composition between the carrier and the light transmission portion with light via the light transmission portion, and
a control unit that controls a position of the carrier and the irradiation unit, and
wherein the control unit controls the position of the carrier and the irradiation unit so that the guide portion is formed.

11. The three-dimensional modeling apparatus according to any one of claims 1 to 10, further comprising:
a blowing control unit that controls the blower unit,
wherein the blowing control unit controls a timing of blowing from the blower unit based on a timing at which at least a part of the modeled object starts to be exposed from the curable composition in the container.

12. A control apparatus of a three-dimensional modeling apparatus,
wherein the three-dimensional modeling apparatus comprises
a container that accommodates a curable composition,
a carrier that is configured to face an inner surface of the container and to have a variable distance with respect to the inner surface; and
a blower unit that performs blowing between the carrier and the container, and
wherein the control apparatus
cures the curable composition in the container to form a modeled object and a support portion that connects the carrier and the modeled object, and
at least temporarily outputs a wind from the blower unit toward at least one of the modeled object and the support portion.

13. A method for manufacturing a modeled object using a three-dimensional modeling apparatus,
in which the three-dimensional modeling apparatus comprises
a container that accommodates a curable composition,
a carrier that is configured to face an inner surface of the container and to have a variable distance with respect to the inner surface, and
a blower unit that performs blowing between the carrier and the container, the method comprising:
curing the curable composition in the container to form a modeled object and a support portion, which connects the carrier and the modeled object; and
at least temporarily outputting a wind from the blower unit toward at least one of the modeled object and the support portion.
